# EUROPEAN PATENT SPECIFICATION

(11) **EP 4 442 161 B1**
(45) Date of publication and mention of the grant of the patent: **26.02.2025**
(21) Application number: 24164323.8
(22) Date of filing: 18.03.2024
(51) Int. Cl.: A47B 91/16

(54) **TABLE AND CHAIR SELF-BALANCING DEVICE**
SELBSTBALANCIERENDE TISCH- UND STUHLVORRICHTUNG
DISPOSITIF D'AUTO-ÉQUILIBRAGE POUR TABLE ET CHAISE

(30) Priority: 20.03.2023 CN 202320541526 U
(43) Date of publication of application: 09.10.2024
(73) Proprietor: Foshan Jiexunte Technology Co., Limited, Foshan City, Foshan (CN)
(72) Inventor: SU, Jianfeng, Foshan (CN)
(74) Representative: Bayramoglu et al.

(56) References cited:
- CN-U- 209 315 281
- DE-B- 1 273 150

## Description

### TECHNICAL FIELD

The invention relates to the field of table and chair balancing devices, and in particular to a table and chair self-balancing device.

### BACKGROUND

Table is a piece of quadrilateral furniture for placing things thereon, and chair is piece of furniture for a user to rest on. The bottom of a table or chair is usually supported by four legs, and the balance of the table or chair is usually adjusted through a balancing device. This is often done with a screw-type mechanism commonly found at the bottom of the legs.

The table and chair balancing device includes screws, nuts, and connecting rods. To adjust the balance at the bottom of the table or chair, the nut is rotated to change the height of the screw, thereby adjusting the imbalanced leg at the bottom of the table or chair to the same height as other legs.

In the prior art, when the balance of the table or chair is adjusted, it is usually necessary to manually adjust the nut up and down, and it is troublesome to adjust the nuts one by one. This cannot meet the needs of people with an increasingly fast pace of life nowadays. To solve this problem, a table and chair self-balancing device is needed. A table and chair self-balancing device is known from CN 209 315 281 U.

### SUMMARY

To solve the problem existing in the prior art, the invention proposes a table and chair self-balancing device.

In order to solve the technical problem, the invention adopts the following technical solution. The table and chair self-balancing device includes a mounting housing, where an inner wall of the mounting housing is provided with an adjustment assembly; and
the adjustment assembly includes a cylinder shell; the cylinder shell is fixedly connected with the inner wall of the mounting housing; a bottom of an inner wall of the cylinder shell is fixedly connected with a return spring; a top end of the return spring is fixedly connected with a piston; an outer wall of the piston is sleeved with a first washer; a top end of the piston is provided with a push rod; a bottom of the push rod is fixedly connected with a threaded element; the threaded element is inserted into an inner wall of the piston; the top end of the piston is further provided with an adjusting spring; the adjusting spring is sleeved on an outer wall of the push rod; a top end of the adjusting spring is fixedly connected with a cover; the inner wall of the cylinder shell is provided with a silicone oil chamber; an inner wall of the silicone oil chamber is filled with silicone oil; the top end of the piston is further provided with a first flow port, and a side of the piston is provided with a second flow port; and an inner diameter of the second flow port is larger than an inner diameter of the first flow port.

Preferably, a bottom of the adjusting spring is fixedly connected with a gasket; the gasket is made of a metal material; and a bottom of the gasket is provided at the top end of the piston.

Preferably, the top end of the piston is fixedly connected with a second washer; the second washer and the first washer are both made of a rubber material; and the second washer is provided at a bottom of the gasket.

Preferably, the mounting housing is made of a plastic material; an outer wall of the mounting housing is provided with multiple arc-shaped grooves; and the multiple arc-shaped grooves are distributed circumferentially on the outer wall of the mounting housing.

Preferably, a top side of the push rod is fixedly connected with an L-shaped connection element; a top end of the mounting housing is provided with a slot; and the connecting rod is inserted into the slot.

Preferably, the cylinder shell is made of a stainless steel material; a top end of the cylinder shell is provided with a groove; and the cover is provided in the groove.

The invention has the following beneficial effects:
1. In the invention, the push rod is inserted into a threaded hole at a bottom of a table or chair leg. Thus, the mounting housing is mounted at the bottom of the table or chair leg. When the exposed height of the mounting housing and the push rod is above a horizontal plane of other table or chair leg, the threaded element at the bottom of the push rod is subjected to an external force, thereby pushing the piston to slide downward. The silicone oil in the silicone oil chamber flows from the first flow port of the piston to the other end. Due to a small diameter of the first flow port, a flow rate of the silicone oil decreases, resulting in a reaction force on the piston. Thus, the piston descends slowly or stops. When the threaded element at the bottom of the push rod is not subjected to any external force, only a force of the return spring acts on the piston. Due to a large diameter of the second flow port, the flow rate of silicone oil increases. Thus, the piston quickly slides upwards until the push rod is pushed outward to increase the overall height. In this way, the invention solves the problem of inconvenient height adjustment of the table and chair.
2. In the invention, the metal gasket is provided at the bottom of the adjusting spring. The gasket increases a contact area between the adjusting spring and the piston, so as to ensure stable movement of the piston. The second washer made of a rubber material is provided at the top end of the piston. The second washer reduces an impact force of the gasket on the piston when the gasket contacts the piston.

### BRIEF DESCRIPTION OF THE DRAWINGS

To describe the technical solutions in the embodiments of the invention or in the prior art more clearly, the following briefly introduces the drawings required for describing the embodiments or the prior art. Apparently, the drawings in the following description show merely some embodiments of the invention, and those of ordinary skill in the art may still derive other drawings from these drawings without creative efforts.
FIG. 1 is a stereoscopic view of a table and chair self-balancing device according to the invention;
FIG. 2 is a schematic diagram of the table and chair self-balancing device in a pushed-in state according to the invention;
FIG. 3 is a schematic diagram of the table and chair self-balancing device in a pulled-out state according to the invention; and
FIG. 4 is a structural diagram of a piston according to the invention.

Reference Numerals: 1. mounting housing; 2. cylinder shell; 3. return spring; 4. piston; 5. adjusting spring; 6. push rod; 7. first washer; 8. second washer; 9. gasket; 10. connection element; 11. cover; 12. silicone oil chamber; 13. first flow port; 14. second flow port.

### DETAILED DESCRIPTION OF THE EMBODIMENTS

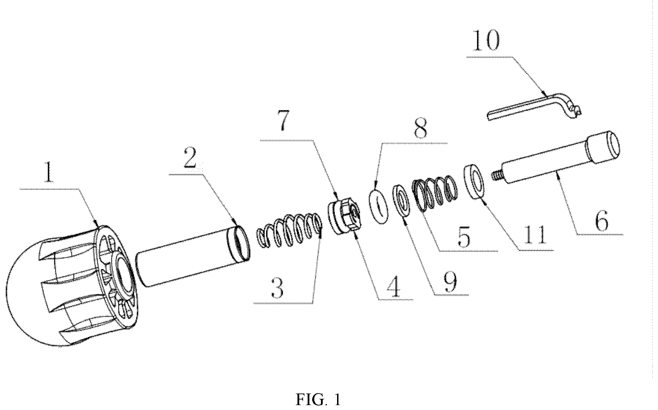

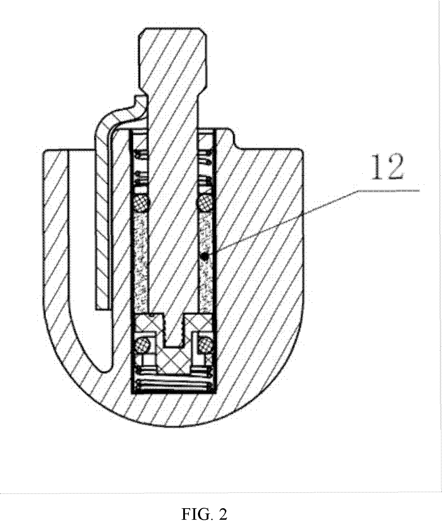

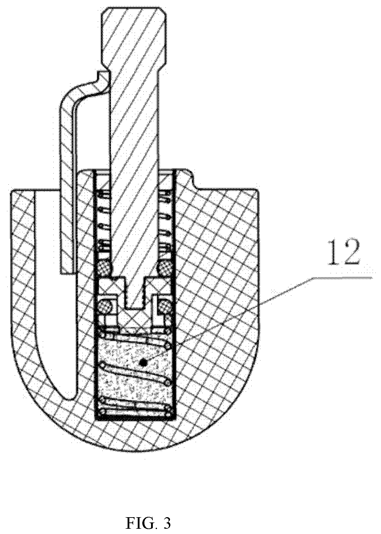

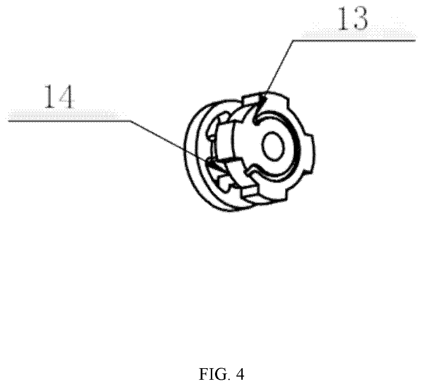

As shown in FIGS. 1 to 4, a table and chair self-balancing device includes mounting housing 1. An inner wall of the mounting housing 1 is provided with an adjustment assembly.

The adjustment assembly includes cylinder shell 2. The cylinder shell 2 is fixedly connected with the inner wall of the mounting housing 1. A bottom of an inner wall of the cylinder shell 2 is fixedly connected with return spring 3. A top end of the return spring 3 is fixedly connected with piston 4. An outer wall of the piston 4 is sleeved with first washer 7. A top end of the piston 4 is provided with push rod 6. A bottom of the push rod 6 is fixedly connected with a threaded element. The threaded element is inserted into an inner wall of the piston 4. The top end of the piston 4 is further provided with adjusting spring 5. The adjusting spring 5 is sleeved on an outer wall of the push rod 6. A top end of the adjusting spring 5 is fixedly connected with cover 11. The inner wall of the cylinder shell 2 is provided with silicone oil chamber 12. An inner wall of the silicone oil chamber 12 is filled with silicone oil. The top end of the piston 4 is further provided with first flow port 13, and a side of the piston 4 is provided with second flow port 14. An inner diameter of the second flow port 14 is larger than an inner diameter of the first flow port 13.

In prior art, when the balance of the table or chair is adjusted, it is usually necessary to manually adjust the nut up and down, and it is troublesome to adjust the nuts one by one. This cannot meet the needs of people with an increasingly fast pace of life. The invention aims to solve the problem of inconvenient adjustment of the height of a table and chair. In the invention, the cover 11 is provided to facilitate the mounting of the return spring 3, the piston 4, and the adjusting spring 5 in the cylinder shell 2. To mount the mounting housing 1 at a bottom of a table or chair leg, the push rod 6 is inserted into a threaded hole at the bottom of the table or chair leg. Thus, through the push rod 6, the mounting housing 1 is mounted at the bottom of the table or chair leg. When the exposed height of the mounting housing 1 and the push rod 6 is above a horizontal plane of other table or chair leg, the threaded element at the bottom of the push rod 6 is subjected to an external force, thereby pushing the piston 4 to slide downward. Under the external force, the silicone oil in the silicone oil chamber 12 of the cylinder shell 2 flows from the first flow port 13 of the piston 4 to the other end. Due to a small diameter of the first flow port 13, a flow rate of the silicone oil decreases, resulting in a reaction force on the piston 4. Thus, the piston 4 descends slowly or stops. When the threaded element at the bottom of the push rod 6 is not subjected to the external force, only a force of the return spring 3 acts on the piston 4. Due to a large diameter of the second flow port 14, the flow rate of silicone oil increases. Thus, the piston 4 quickly slides upwards until the push rod 6 is pushed outward to increase the overall height. After the mounting housing is mounted at the bottom of the table or chair leg, when the mounting housing is suspended from the ground, the push rod 6 automatically extends until it contacts the ground. Therefore, the invention can achieve balance of the table and chair.

Further, as shown in FIG. 1, a bottom of the adjusting spring 5 is fixedly connected with gasket 9. The gasket 9 is made of a metal material. A bottom of the gasket 9 is provided at the top end of the piston 4.

The metal gasket 9 is provided at the bottom of the adjusting spring 5. The gasket 9 increases a contact area between the adjusting spring 5 and the piston 4, so as to ensure stable movement of the piston 4.

Further, as shown in FIG. 1, the top end of the piston 4 is fixedly connected with second washer 8. The second washer 8 and the first washer 7 are both made of a rubber material. The second washer 8 is provided at a bottom of the gasket 9.

The second washer 8 made of a rubber material is provided at the top end of the piston 4. The second washer 8 reduces an impact force of the gasket 9 on the piston 4 when the gasket 9 contacts the piston 4.

Further, as shown in FIG. 1, the mounting housing 1 is made of a plastic material. An outer wall of the mounting housing 1 is provided with arc-shaped grooves. There are multiple arc-shaped grooves distributed circumferentially on the outer wall of the mounting housing 1.

The multiple arc-shaped grooves are arranged on the outer wall of the mounting housing 1. The arc-shaped grooves enhance a friction force on the outer wall of the mounting housing 1, thereby facilitating gripping and fixing of the mounting housing 1 when it is necessary to grip and mount the mounting housing 1.

Further, as shown in FIG. 1, a top side of the push rod 6 is fixedly connected with connection element 10. The connection element 10 is L-shaped. A top end of the mounting housing 1 is provided with a slot, and the connecting rod is inserted into the slot.

The L-shaped connection element 10 is provided at the top side of the push rod 6. To mount the push rod 6 into the threaded hole at the bottom of the table or chair leg, it is easy to pull out the connection element 10. By rotating the connection element 10, the push rod 6 is rotated into the threaded hole at the bottom of the table or chair leg.

Further, as shown in FIG. 1, the cylinder shell 2 is made of a stainless steel material. A top end of the cylinder shell 2 is provided with a groove, and the cover 11 is provided in the groove.

The cylinder shell 2 is made of a stainless steel to enhance the strength of the cylinder shell 2. The groove is provided at the top end of the cylinder shell 2 to receive the cover 11.

The invention aims to solve the problem of inconvenient adjustment of the height of a table and chair. In the invention, the cover 11 is provided to facilitate the mounting of the return spring 3, the piston 4, and the adjusting spring 5 in the cylinder shell 2. The top side of the push rod 6 is provided with the L-shaped connection element 10. To insert the push rod 6 into a threaded hole at a bottom of a table or chair leg, the connection element 10 is easily pulled out. The connection element 10 is rotated, so as to rotate the push rod 6 into the threaded hole at the bottom of the table or chair leg. Thus, the mounting housing 1 is mounted at the bottom of the table or chair leg. When the exposed height of the mounting housing 1 and the push rod 6 is above a horizontal plane of other table or chair leg, the threaded element at the bottom of the push rod 6 is subjected to an external force, thereby pushing the piston 4 to slide downward. Under the external force, the silicone oil in the silicone oil chamber 12 of the cylinder shell 2 flows from the first flow port 13 of the piston 4 to the other end. Due to a small diameter of the first flow port 13, a flow rate of the silicone oil decreases, resulting in a reaction force on the piston 4. Thus, the piston 4 descends slowly or stops. When the threaded element at the bottom of the push rod 6 is not subjected to the external force, only a force of the return spring 3 acts on the piston 4. Due to a large diameter of the second flow port 14, the flow rate of silicone oil increases. Thus, the piston 4 quickly slides upwards until the push rod 6 is pushed outward to increase the overall height. The metal gasket 9 is provided at the bottom of the adjusting spring 5. The gasket 9 increases a contact area between the adjusting spring 5 and the piston 4, so as to ensure stable movement of the piston 4. The second washer 8 made of a rubber material is provided at the top end of the piston 4. The second washer 8 reduces an impact force of the gasket 9 on the piston 4 when the gasket 9 contacts the piston 4. After the mounting housing is mounted at the bottom of the table or chair leg, when the mounting housing is suspended from the ground, the push rod 6 automatically extends until it contacts the ground. Therefore, the invention can achieve balance of the table and chair.

The above described are the basic principles, main features, and advantages of the invention It should be understood by those skilled in the art that, the invention is not limited by the above embodiments, and the above embodiments and the descriptions only illustrate the principle of the invention.

## Claims

1. A table and chair self-balancing device, comprising a mounting housing (1), wherein an inner wall of the mounting housing (1) is provided with an adjustment assembly; and
the adjustment assembly comprises a cylinder shell (2); the cylinder shell (2) is fixedly connected with the inner wall of the mounting housing (1); a bottom of an inner wall of the cylinder shell (2) is fixedly connected with a return spring (3); a top end of the return spring (3) is fixedly connected with a piston (4); an outer wall of the piston (4) is sleeved with a first washer (7); a top end of the piston (4) is provided with a push rod (6); a bottom of the push rod (6) is fixedly connected with a threaded element; the threaded element is inserted into an inner wall of the piston (4); the top end of the piston (4) is further provided with an adjusting spring (5); the adjusting spring (5) is sleeved on an outer wall of the push rod (6); a top end of the adjusting spring (5) is fixedly connected with a cover (11); the inner wall of the cylinder shell (2) is provided with a silicone oil chamber (12); an inner wall of the silicone oil chamber (12) is filled with silicone oil; the top end of the piston (4) is further provided with a first flow port (13), and a side of the piston (4) is provided with a second flow port (14); and an inner diameter of the second flow port (14) is larger than an inner diameter of the first flow port (13).

2. The table and chair self-balancing device according to claim 1, wherein a bottom of the adjusting spring (5) is fixedly connected with a gasket (9); the gasket (9) is made of a metal material; and a bottom of the gasket (9) is provided at the top end of the piston (4).

3. The table and chair self-balancing device according to claim 2, wherein the top end of the piston (4) is fixedly connected with a second washer (8); the second washer (8) and the first washer (7) are both made of a rubber material; and the second washer (8) is provided at a bottom of the gasket (9).

4. The table and chair self-balancing device according to claim 3, wherein the mounting housing (1) is made of a plastic material; an outer wall of the mounting housing (1) is provided with multiple arc-shaped grooves; and the multiple arc-shaped grooves are distributed circumferentially on the outer wall of the mounting housing (1).

5. The table and chair self-balancing device according to claim 4, wherein a top side of the push rod (6) is fixedly connected with an L-shaped connection element (10); a top end of the mounting housing (1) is provided with a slot; and the connecting rod is inserted into the slot.

6. The table and chair self-balancing device according to claim 5, wherein the cylinder shell (2) is made of a stainless steel material; a top end of the cylinder shell (2) is provided with a groove; and the cover (11) is provided in the groove.

## Patentansprüche

1. Tisch- und Stuhl-Selbstausgleichsvorrichtung, die ein Montagegehäuse (1) umfasst, wobei eine Innenwand des Montagegehäuses (1) mit einer Einstellanordnung versehen ist; und
wobei die Einstellanordnung eine Zylinderhülse (2) umfasst; die Zylinderhülse (2) fest mit der Innenwand des Montagegehäuses (1) verbunden ist; eine Unterseite einer Innenwand der Zylinderhülse (2) fest mit einer Rückstellfeder (3) verbunden ist; ein oberes Ende der Rückstellfeder (3) fest mit einem Kolben (4) verbunden ist; eine Außenwand des Kolbens (4) mit einer ersten Unterlegscheibe (7) ummantelt ist; ein oberes Ende des Kolbens (4) mit einer Schubstange (6) versehen ist; eine Unterseite der Schubstange (6) fest mit einem Gewindeelement verbunden ist; das Gewindeelement in eine Innenwand des Kolbens (4) eingesetzt ist; das obere Ende des Kolbens (4) weiter mit einer Einstellfeder (5) versehen ist; die Einstellfeder (5) eine Außenwand der Schubstange (6) ummantelt; ein oberes Ende der Einstellfeder (5) fest mit einer Abdeckung (11) verbunden ist; die Innenwand der Zylinderhülse (2) mit einer Silikonölkammer (12) versehen ist; eine Innenwand der Silikonölkammer (12) mit Silikonöl gefüllt ist; das obere Ende des Kolbens (4) weiter mit einer ersten Durchflussöffnung (13) versehen ist, und eine Seite des Kolbens (4) mit einer zweiten Durchflussöffnung (14) versehen ist; und ein Innendurchmesser der zweiten Durchflussöffnung (14) größer ist als ein Innendurchmesser der ersten Durchflussöffnung (13).

2. Tisch- und Stuhl-Selbstausgleichsvorrichtung nach Anspruch 1, wobei eine Unterseite der Einstellfeder (5) fest mit einer Dichtung (9) verbunden ist; die Dichtung (9) aus einem Metallmaterial hergestellt ist; und eine Unterseite der Dichtung (9) an dem oberen Ende des Kolbens (4) bereitgestellt ist.

3. Tisch- und Stuhl-Selbstausgleichsvorrichtung nach Anspruch 2, wobei das obere Ende des Kolbens (4) fest mit einer zweiten Unterlegscheibe (8) verbunden ist; die zweite Unterlegscheibe (8) und die erste Unterlegscheibe (7) beide aus einem Gummimaterial hergestellt sind; und die zweite Unterlegscheibe (8) an einer Unterseite der Dichtung (9) bereitgestellt ist.

4. Tisch- und Stuhl-Selbstausgleichsvorrichtung nach Anspruch 3, wobei das Montagegehäuse (1) aus einem Kunststoffmaterial hergestellt ist; eine Außenwand des Montagegehäuses (1) mit mehreren bogenförmigen Nuten versehen ist; und die mehreren bogenförmigen Nuten umfänglich an der Außenwand des Montagegehäuses (1) verteilt sind.

5. Tisch- und Stuhl-Selbstausgleichsvorrichtung nach Anspruch 4, wobei eine Oberseite der Schubstange (6) fest mit einem L-förmigen Verbindungselement (10) verbunden ist; ein oberes Ende des Montagegehäuses (1) mit einem Schlitz versehen ist; und die Verbindungsstange in dem Schlitz eingesetzt ist.

6. Tisch- und Stuhl-Selbstausgleichsvorrichtung nach Anspruch 5, wobei die Zylinderhülse (2) aus einem rostfreien Stahlmaterial hergestellt ist; ein oberes Ende der Zylinderhülse (2) mit einer Nut versehen ist; und die Abdeckung (11) in der Nut bereitgestellt ist.

## Revendications

1. Dispositif d'auto-équilibrage pour table et chaise, comprenant un logement de montage (1), dans lequel une paroi interne du logement de montage (1) est pourvue d'un ensemble de réglage ; et
l'ensemble de réglage comprend une coque de cylindre (2) ; la coque de cylindre (2) est reliée de manière fixe à la paroi interne du logement de montage (1) ; un fond d'une paroi interne de la coque de cylindre (2) est relié de manière fixe à un ressort de rappel (3) ; une extrémité supérieure du ressort de rappel (3) est reliée de manière fixe à un piston (4) ; une paroi externe du piston (4) est emmanchée avec une première rondelle (7) ; une extrémité supérieure du piston (4) est pourvue d'une tige de poussée (6) ; un fond de la tige de poussée (6) est relié de manière fixe à un élément fileté ; l'élément fileté est inséré dans une paroi interne du piston (4) ; l'extrémité supérieure du piston (4) est en outre pourvue d'un ressort de réglage (5) ; le ressort de réglage (5) est emmanché sur une paroi externe de la tige de poussée (6) ; une extrémité supérieure du ressort de réglage (5) est reliée de manière fixe à un couvercle (11) ; la paroi interne de la coque de cylindre (2) est pourvue d'une chambre d'huile de silicone (12) ; une paroi interne de la chambre d'huile de silicone (12) est remplie d'huile de silicone ; l'extrémité supérieure du piston (4) est en outre pourvue d'un premier port d'écoulement (13), et un côté du piston (4) est pourvu d'un deuxième port d'écoulement (14) ; et un diamètre interne du deuxième port d'écoulement (14) est plus grand qu'un diamètre interne du premier port d'écoulement (13).

2. Dispositif d' auto-équilibrage pour table et chaise selon la revendication 1, dans lequel un fond du ressort de réglage (5) est relié de manière fixe à un joint d'étanchéité (9) ; le joint d'étanchéité (9) est constitué d'un matériau métallique ; et un fond du joint d'étanchéité (9) est disposé au niveau de l'extrémité supérieure du piston (4).

3. Dispositif d' auto-équilibrage pour table et chaise selon la revendication 2, dans lequel l'extrémité supérieure du piston (4) est reliée de manière fixe à une deuxième rondelle (8) ; la deuxième rondelle (8) et la première rondelle (7) sont toutes deux constituées d'un matériau de caoutchouc ; et la deuxième rondelle (8) est disposée au niveau d'un fond du joint d'étanchéité (9).

4. Dispositif d' auto-équilibrage pour table et chaise selon la revendication 3, dans lequel le logement de montage (1) est constitué d'un matériau plastique ; une paroi externe du logement de montage (1) est pourvue de multiples rainures en forme d'arc ; et les multiples rainures en forme d'arc sont réparties de manière circonférentielle sur la paroi externe du logement de montage (1).

5. Dispositif d' auto-équilibrage pour table et chaise selon la revendication 4, dans lequel un côté supérieur de la tige de poussée (6) est relié de manière fixe à un élément de liaison en forme de L (10) ; une extrémité supérieure du logement de montage (1) est pourvue d'une fente ; et la tige de liaison est insérée dans la fente.

6. Dispositif d' auto-équilibrage pour table et chaise selon la revendication 5, dans lequel la coque de cylindre (2) est constituée d'un matériau en acier inoxydable ; une extrémité supérieure de la coque de cylindre (2) est pourvue d'une rainure ; et le couvercle (11) est disposé dans la rainure.
